# EUROPÄISCHE PATENTSCHRIFT

(11) **EP 0 993 741 B1**
(45) Veröffentlichungstag und Bekanntmachung des Hinweises auf die Patenterteilung: **14.11.2001**
(21) Anmeldenummer: 97926953.7
(22) Anmeldetag: 01.07.1997
(51) Int. Cl.: H04Q 7/08

(54) **VERFAHREN ZUR WEITERLEITUNG VON MELDUNGEN UND ENTSPRECHEND ANGEPASSTE VORRICHTUNG**
METHOD FOR FORWARDING MESSAGES AND APPROPRIATE DEVICE
PROCEDE D'ACHEMINEMENT DE MESSAGES ET DISPOSITIF ADAPTE A CET EFFET

(43) Veröffentlichungstag der Anmeldung: 19.04.2000
(73) Patentinhaber: Swisscom Mobile AG, 3050 Bern (CH)
(72) Erfinder: HEUTSCHI, Walter, CH-3303 Jegenstorf (CH); Paul, Hans Ulrich, CH-3032 Hinterkappelen (CH); Ramseyer, Bernahrd, CH-3422 Kirchberg (CH)
(74) Vertreter: BOVARD AG - Patentanwälte
(86) Internationale Anmeldenummer: CH9700258
(87) Internationale Veröffentlichungsnummer: WO9901995

(56) Entgegenhaltungen:
- EP-A- 0 595 592
- EP-A- 0 660 624
- WO-A-95/12256
- WO-A-97/44965

## Beschreibung

Die vorliegende Erfindung betrifft ein Verfahren zur Weiterleitung von Meldungen in einem Telekommunikationsnetzwerk. Im Speziellen betrifft die vorliegende Erfindung ein Verfahren zur Weiterleitung von Personenrufmeldungen in einem Telekommunikationsnetz.

Verschiedene drahtlose Telekommunikationssysteme teilen sich zur Zeit die Gunst der Konsumenten wie auch den Raum der verfügbaren Radiofrequenzen. Unter diesen Systemen kann man namentlich zwischen bidirektionalen Systemen unterscheiden, die insbesondere an die Sprachübertragung angepasst sind und prinzipiell unidirektionalen Systemen, die oft zur Übermittlung von alphanumerischen Meldungen an Personenrufgeräte oder Pager verwendet werden.

Die wichtigsten bidirektionalen digitalen Mobiltelekommunikationssysteme umfassen zur Zeit zum Beispiel das System GSM, welches meistens mit einer Radiofrequenz von 900 MHz arbeitet, das System PCN, welches mit einer Radiofrequenz von 1800 MHz arbeitet, das System NMT (Nordic Mobile Telephone System), das System TACS (Total Access Mobile Telephone System) und das System PDC (Personal Digital Cellular). Das System GSM wird zur Zeit von mehr als 120 Netzwerkbetreibern angeboten, die in mehr als 80 Ländern tätig sind. Ein Teilnehmer ist im allgemeinen bei einem einzigen Netzwerkbetreiber abonniert und kann so anrufen oder telefonische Anrufe erhalten, während er sich in der durch diesen Netzwerkbetreiber verwalteten geographischen Zone, das heisst in einer Zone, die durch die Radioantennen des genannten Netzwerkbetreibers abgedeckt ist, befindet. Um die ihren Abonnenten angebotene geographische Abdeckung zu erweitern, haben die meisten Netzwerkbetreiber unter sich eine gewisse Anzahl bilateraler Verträge abgeschlossen, was Abonnenten ermöglicht, ihr zellulares Funktelefon in der geographischen Zone zu verwenden, welche durch die Gesamtheit der Netzwerkbetreiber abgedeckt ist, mit welchen ein Vertrag abgeschlossen wurde. Eine solche Möglichkeit ist unter dem Namen Roaming bekannt und im "International roaming in digital cellular networks", durch I. Brini et al., CSELT technical reports, Dezember 1992, vol. 20, n°6, Seiten 531-536 beschrieben. Ein Netzwerkbetreiber, der seinen Abonnenten die Möglichkeit zum Roaming anbieten will, betreibt im allgemeinen eine sogenannte Standorttabelle ("location register"), die eine vom momentanen Standort jedes Teilnehmers abhängige Information enthält. Das Roaming-Verfahren ist weitgehend automatisiert: sobald ein Teilnehmer sein Endgerät in einer anderen geographischen Zone benutzt als in derjenigen, welche durch den Netzwerkbetreiber abgedeckt ist, bei welchem der Teilnehmer ein Abonnement abgeschlossen hat, wird er mittels einer beispielsweise in einer Chipkarte (SIM Karte, "subscriber identification module") gespeicherten Identifikation erkannt. Sein Standort wie auch andere Angaben werden in einer durch den Netzwerkbetreiber, der für die besuchte geographische Zone verantwortlich ist, verwalteten Besucherstandorttabelle (VLR, "Visitors Location Registery") gespeichert und an den Netzwerkbetreiber übertragen, bei welchem der Teilnehmer abonniert ist (Heimnetzwerkbetreiber, oder "home operator"). Sobald ein Teilnehmer sich in einem besuchten Netzwerk zu erkennen gibt, wird dies bei seinem Heimnetzwerkbetreiber vorgemerkt und die für ihn bestimmten Gespräche und Meldungen werden automatisch zu ihm geleitet.

Ausser den klassischen Telefon- oder Telefaxverbindungen erlaubt das GSM-System auch den Versand von kurzen Meldungen oder Daten zwischen den Endgeräten und einer SMS-C ("Short Message Service Center") Zentrale. Diese kurzen Meldungen können beispielsweise auf einer kleinen Flüssigkristallanzeige auf dem Mobiltelefon angezeigt werden.

Das ERMES-System ("Enhanced Radio Message System") bildet ein häufig benutztes, unidirektionales Mobilkommunikationssystem. Es wird insbesondere verwendet, um Meldungen zu senden, die beispielsweise auf der Flüssigkristallanzeige eines Pagers angezeigt werden. Obwohl das System weder interaktive Dialoge noch Gespräche erlaubt, bietet es den Vorteil einer besseren geographischen Abdeckung als das GSM-System, besonders im Innern von Gebäuden. Aus diesem Grund benutzen viele Teilnehmer gleichzeitig ein zellulares Funktelefon des Typs GSM und ein Pager-System vom Typ ERMES, um selbst im Innern von Gebäuden erreichbar zu sein.

Das ERMES-System wird zur Zeit von mehr als 40 Netzwerkbetreibem angeboten, welche unter sich eine gewisse Anzahl Roamingverträge abgeschlossen haben. Abonnenten können Meldungen empfangen, wenn sie sich in einer geographischen Zone befinden, die durch einen Netzwerkbetreiber verwaltet wird, welcher einen Roamingvertrag mit ihrem Heimnetzwerkbetreiber abgeschlossen hat. Solche Verträge wurden beispielsweise zwischen der Mehrzahl der Netzwerkbetreiber abgeschlossen, die Unterzeichner des "ERMES Memorandum of Understanding (MoU)" sind. Um Meldungen in einer anderen Zone zu empfangen, muss ein Teilnehmer vorher seinen Heimnetzwerkbetreiber über seine Reisepläne bzw. seinen Aufenthaltsort informieren. Der Heimnetzwerkbetreiber trifft anschliessend die notwendigen Massnahmen, damit während der verabredeten Reiseperiode die für den Teilnehmer bestimmten Meldungen in die besuchten geographischen Zonen geleitet werden. Im ERMES-System sind verschiedene Zeichensätze vorgesehen, was dem Teilnehmer erlaubt, Meldungen zu empfangen, die in seiner Sprache und mit den seiner Sprache entsprechenden Zeichen angezeigt werden, selbst wenn er sich im Ausland befindet.

Dieser Typ von Roaming ist wenig flexibel im Vergleich zum Mobiltelefon und bedingt, dass der Teilnehmer die Initiative übernimmt. Dieses Verfahren kann für den Teilnehmer umständlich sein und stellt eine Fehlerquelle bei der manuellen Eingabe der Roamingdaten dar.

In der WO 95/12256 wird ein Verfahren sowie eine Vorrichtung für das automatisierte Weiterleiten von Meldungen in einem selektiven Signalisierungssystem mit ersten Benutzern beschrieben. Gemäss dem in WO 95/12256 vorgeschlagenen Verfahren kann das selektive Signalisierungssystem mit einer unabhängigen Datenbank kommunizieren, beispielsweise eine Datenbank eines Reisereservierungssystems oder eine Registrationsdatenbank eines Kommunikationssystems, welche Standortangaben über zweite Benutzer enthält. Wenn das selektive Signalisierungssystem bestimmt, dass eine Meldung an einen gemeinsamen Benutzer ist leitet er die Meldung unter Benutzung der in der Datenbank gespeicherten Standortangaben automatisch an den gemeinsamen Benutzer weiter. Diese in WO 95/12256 vorgeschlagene Lösung hat allerdings den Nachteil, dass bereits bestehende Signalisierungssysteme modifiziert und angepasst werden müssen, was insbesondere bei Standard-basierten Systemen unerwünscht sein kann.

Es ist eine Aufgabe der vorliegenden Erfindung, ein verbessertes Verfahren zur Weiterleitung von Meldungen in andere Netze zu schaffen, insbesondere ein Verfahren, welches verbesserte Roaming-Möglichkeiten erlaubt und welches keine Veränderungen an bereits bestehenden Systemen benötigt.

Diese Aufgabe wird durch die in den kennzeichnenden Teilen der Patentansprüche 1 und 7 angegebenen Merkmale gelöst.

Insbesondere wird dieses Ziel gemäss der Erfindung für Teilnehmer erreicht, die gleichzeitig auf ein erstes Kommunikationssystem und auf ein zweites Kommunikationssystem abonniert sind, beispielsweise gleichzeitig auf ein Mobilfunktelefonsystem des Typs GSM, DCS oder NMT und auf ein Meldungsübermittlungssystem des Typs ERMES. Entsprechend dem Verfahren der Erfindung werden mindestens gewisse, vom zweiten Kommunikationssystem ausgestrahlte Meldungen von einer Vorrichtung über eine Luftschnittstelle empfangen und von dieser Vorrichtung, unter Verwendung von Information, die den momentanen geographischen Standort des Empfängers angibt, via das genannte zweite Kommunikationssystem an den Empfänger übermittelt, wobei diese Information in einer durch den Netzwerkbetreiber eines ersten Kommunikationssystems verwalteten Standorttabelle (Location Register) gespeichert wird. Im besonderen Fall, wenn das erste Kommunikationssystem ein GSM-System und das zweite ein ERMES-System ist, werden ERMES-Meldungen einem Empfänger im Ausland unter Verwendung der Informationen des Standorts des Abonnenten weitergeleitet, welche in der Standorttabelle des GSM-Systems gespeichert sind.

Das erfindungsgemässe Verfahren wird mit Hilfe einer Vorrichtung ausgeführt, welche mindestens eine programmierbare Maschine und Mittel zum Empfang einer im zweiten Kommunikationssystem abgesandten Meldung aufweist, Mittel zum Lesen einer durch den Netzwerkbetreiber des ersten Kommunikationssystems verwalteten Standorttabelle und Mittel zur erneuten Sendung von Meldungen mit einer durch die Standorttabelle bestimmten Adresse, um die Weiterleitung der Meldung bis zum Empfänger zu erlauben, wenn der Empfänger sich nicht in der durch seinen Heimnetzwerkbetreiber verwalteten geographischen Zone befindet. Die Standorttabelle enthält für mindestens gewisse Abonnenten des Netzwerkbetreibers des ersten Kommunikationssystems eine Information, die abhängig vom aktuellen Standort des Abonnenten ist. Roamingmittel sind vorgesehen, um die Standorttabelle zu aktualisieren, wenn sich ein Abonnent mit seinem ersten Endgerät in eine andere geographische Zone als diejenige, die vom genannten Netzwerkbetreiber verwaltet wird, verschiebt.

Das Verfahren gemäss der Erfindung wird im wesentlichen mit Hilfe einer zusätzlichen Vorrichtung durchgeführt, welche dazu befähigt ist, ERMES-Meldungen via die Luftschnittstelle I1 zu empfangen, die Meldungsadresse mit der Standortinformation zu erweitern und sie auf einem Zugang des Funkrufsystems (15) wieder einzugeben, wobei die Luftschnittstelle 11 und die Interface I5 im ERMES-System standardisiert sind. Die Funkrufzentrale (FRZ), die Verteilnetze oder die Basisstation des ERMES-Systems müssen demnach nicht angepasst werden, um das erfindungsgemässe Verfahren durchzuführen. Vorzugsweise wird das erfindungsgemässe Verfahren ohne Modifikation der Vermittlungstelle für Mobildienste (MSC, Mobile Switching Center) des ersten Kommunikationssystems GSM durchgeführt.

Wenn ein Teilnehmer sich zum Beispiel mit seinem zellularen GSM-Funktelefon und seinem ERMES-Pager in ein anderes Land begibt; können auf diese Art und Weise die ERMES-Meldungen, welche für ihn bestimmt sind, automatisch auf seinen Pager geleitet werden, sobald die durch den GSM-Heimnetzwerkbetreiber verwaltete Standorttabelle mit den durch die Roaming-Fähigkeiten des GSM-Systems aktualisierten Informationen aktualisiert worden ist.

Ein Anrufumleitungsverfahren für Teilnehmer, die gleichzeitig einen ERMES-Pager und ein GSM-Mobilfunktelefon benutzen, ist schon bekannt. Dieser Service erlaubt dem Teilnehmer, für sein GSM-Mobilfunktelefon bestimmte Anrufe auf seinen Pager umleiten zu lassen. Wenn der (GSM-) Teilnehmer angerufen wird, erscheint eine Meldung auf seinem (ERMES) Pager. Der Teilnehmer kann dann seinen GSM-Apparat aktivieren und den Telefonanruf beantworten. Auf diese Weise können Mitteilungen empfangen werden, selbst wenn der Teilnehmer sich in einer Umgebung befindet, die durch das ERMES-Netzwerk, aber nicht durch das GSM-Netzwerk, abgedeckt ist, beispielsweise im Innern von Gebäuden. Dieser Service betrifft jedoch nicht die Ausdehnung des Roamings für das ERMES-System. Ausserdem wird dieser Service nur auf Antrag des Teilnehmers in Gang gebracht.

Die EP 0660624 beschreibt ein Roamingverfahren, welches das Leiten von Meldungen an Pager erlaubt, welche mit einem drahtlosen Telefon verbunden sind. Zwischen dem Pager und dem drahtlosen Telefon ist eine physikalische Verbindung notwendig. Dieses Verfahren kann folglich nicht angewendet werden, um Meldungen an Teilnehmer zu leiten, die schon mit traditionellen Pagern und drahtlosen Telefonen ausgerüstet sind, die physikalisch nicht verbunden werden können.

Die US 5414750 beschreibt ein System, um eine telefonische Verbindung mit einem gleichzeitig mit einem Pager und einem Mobiltelefon ausgestatteten Teilnehmer herzustellen, auch wenn der momentane Standort des Teilnehmers dem Mobiltelefonsystem unbekannt ist. In diesem Fall wird eine Meldung an den Pager gesandt, von dem angenommen wird, dass er leichter zu erreichen ist. Zwischen dem Pager und dem Mobiltelefon ist eine physikalische Verbindung eingerichtet. Das Mobiltelefon ist so programmiert, dass es eine Meldung aussendet, die erlaubt, es in der besuchten geographischen Zone zu lokalisieren. Auch dieses System erfordert eine physikalische Verbindung zwischen dem Pager und dem Mobiltelefon.

Die WO 92/09178 beschreibt eine andere Kombination eines Pagers und eines Mobilfunktelefons. Das Mobilfunktelefon teilt dem Pager seinen geographischen Standort mit. Der Pager gebraucht diese Information, um nur die Empfangsstromkreise zu aktivieren, welche in den geeigneten Frequenzbändern, die in diesem geographischen Standort empfangen werden können, arbeiten.

Die Erfindung wird mit Hilfe der durch die beigelegten Figuren illustrierten Beschreibung besser verstanden. Es zeigen

Fig. 1 ein vereinfachtes Blockschema eines gesamten Funknetzwerkes basierend auf dem ERMES-Standard, mit welchem das Verfahren der Erfindung durchgeführt wird.

Fig. 2 ein Organigramm eines Beispieles eines Verfahrens zum Leiten von Meldungen gemäss der Erfindung.

Fig. 3 ein Organigramm eines zweiten Beispieles eines Verfahrens zum Leiten von Meldungen gemäss der Erfindung.

Obwohl sich die Beschreibung und die Figuren mehr spezifisch auf den speziellen Fall der Weiterleitung von ERMES-Meldungen an ebenfalls auf ein GSM-System abonnierte Teilnehmer bezieht, ist es wichtig zu verstehen, dass sich die Erfindung ebenfalls auf die Weiterleitung von Meldungen in irgendeinem Typ eines zweiten Kommunikationsnetzwerkes an auch auf ein erstes Kommunikationssystem abonnierte Teilnehmer bezieht, welches verbesserte Roaming-Möglichkeiten bietet.

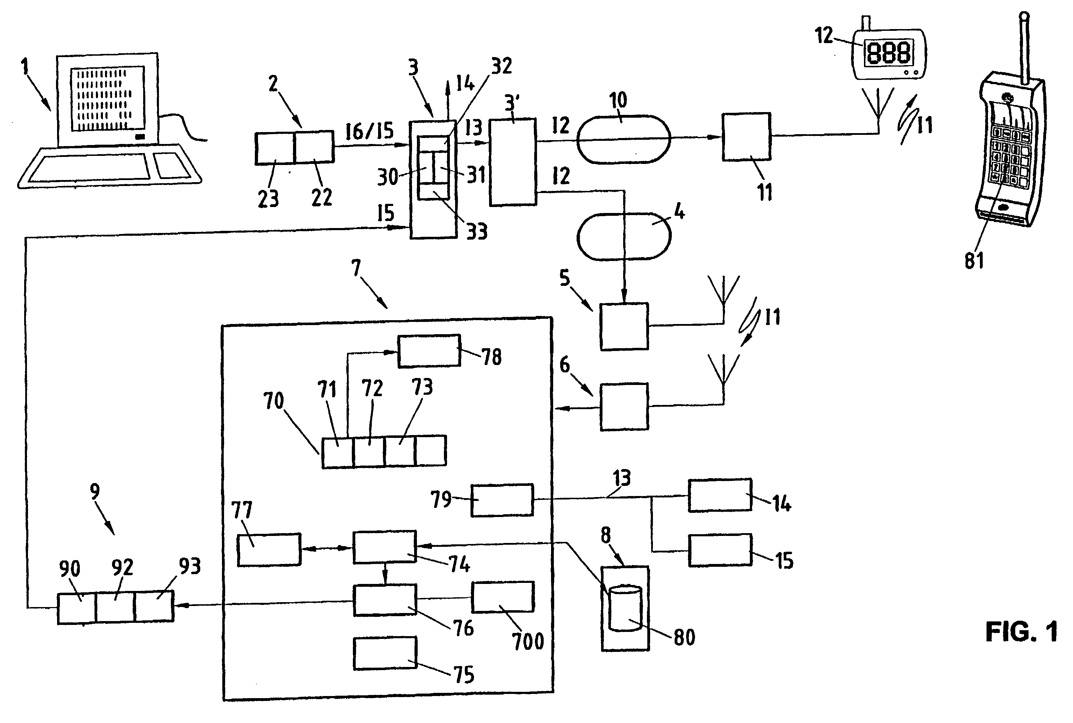

In Figur 1 bezeichnet die Nummer 1 eine Eingabevorrichtung für Meldungen, die einem Anrufenden zur Verfügung steht, um eine Meldung via das Netzwerk ERMES an einen mit einem Pager 12 und einem zellularen Funktelefon 81, in diesem Beispiel des Typs GSM, ausgestatteten Teilnehmer zu senden. Der Anrufende ignoriert eventuell den momentanen Standort des Teilnehmers. Der Anrufende kann verschiedene Mittel verwenden, um eine Meldung in das ERMES-Netzwerk einzuführen. Er kann beispielsweise den ERMES-Netzwerkbetreiber telefonisch anrufen, Wählimpulse auf der Wähltastatur seines Telefonapparates eintippen, oder ein spezielles Menu auf Videotext oder Minitel, ein zellulares Funktelefon des Typs GSM, das ISDN-Netzwerk, usw., benutzen. Auf der Figur sendet der Anrufende seine Meldung 2 mit Hilfe eines Rechners 1 und eines Modems. Die Meldung 2 enthält ein Telegramm 23, beispielsweise eine alphanumerische Mitteilung wie zum Beispiel "zu Hause anrufen" und eine Anrufnummer 22. Entsprechend der Anrufnummer 22 sind in der Funkrufzentrale 3 die Empfängeridentifikation 30 (RIC, Radio Identification Code), ein Alarmtyp 31 sowie die Empfangszone 33 eingerichtet. Die Rufnummer 32 bleibt unverändert. Das ERMES-System sieht acht verschiedene Alarmtypen vor, welche gesandt werden können; wobei jeder Alarm beispielsweise eine verschiedene Tonalität auf dem Pager 12 erzeugt, der die Meldung empfängt. Gewisse Alarme sind für besondere standardisierte den Teilnehmern angebotene Dienste reserviert. Mit der Zuteilung des Alarmtyps 8 zu der Anrufnummer eines Teilnehmers, der sich eventuell ausserhalb seiner geographischen Heimzone befindet, d.h. der geographischen Zone, die durch den Netzwerkbetreiber verwaltet wird bei dem der Teilnehmer abonniert ist, kann der Anruf automatisch weitergeleitet werden. Diese Variante der Erfindung erlaubt dem Anrufer, die gleiche Rufnummer zu wählen, welches auch immer der momentane Standort des Teilnehmers 12 ist. Die Versendung von Meldungen mit einem Alarm 8 kann entsprechend der vom Netzwerkbetreiber gewählten Tarifpolitik der Bezahlung einer speziellen Taxe unterworfen sein.

Die Meldung 2 wird via ein Interface 16 (user dialogue interface) und 15 (access interface) an eine Funkrufzentrale FRZ 3 (PNC paging network controller) übermittelt, die für die Entgegennahme der Anrufe, ihre Behandlung und die Netzwerkverwaltung verantwortlich ist.

Die Funkrufzentrale 3 ist via ein Interface 13 mit der Funkrufnetzsteuerung 3' (PAC, paging area controller) verbunden. Das PAC 3' leitet die Synchronisation zwischen den benachbarten Basisstationen 5, mit welchen sie über ein Interface 12 verbunden ist, welches die Steuerungs- und Alarminformationen zwischen dem PAC 3' und den in der geographischen Heimzone verteilten Basisstationen 5 überträgt. Wenn die Basisstationen 5 von dem PAC 3' entfernt sind, kann das Interface 12 verschiedene Übertragungsnetze 4 benutzen.

Wenn sich der Empfänger 12 in der geographischen Heimzone befindet, die durch die Basisstation 5 seines Heimnetzwerkbetreibers abgedeckt wird, empfängt er auf diese Art und Weise die Meldung des Anrufenden 1.

Die durch die Basisstation 5 ausgesandte Meldung wird durch Empfangsmittel 6 empfangen. Die Empfangsmittel sind mit einer Vorrichtung 7 verbunden, die mindestens eine programmierbare Maschine, beispielsweise eine Arbeitsstation, aufweist. Die Vorrichtung 7 umfasst ein Buffer 70 zur temporären Speicherung der empfangenen Meldung, eingeschlossen den Alarmtyp 71, den RIC 72 und das vorher erwähnte Daten-Telegramm 73.

Die Vorrichtung 7 umfasst ausserdem Lesemittel 74 zum Abfragen einer Teilnehmer-Standorttabelle 80. Die Lesemittel 74 bestehen beispielsweise aus einem Informatikmodul und erlauben das Abfragen der Identität des Empfängers der Meldung im Speichermittel 70 und das Abfragen einer Datenbank 77, welche Verknüpfungen zwischen der in der erhaltenen ERMES-Meldung codierten Identität des Empfängers und der MSISDN-Rufnummer (Mobile Subscriber Identity) dieses gleichen Empfängers im ersten Kommunikationssystem (GSM) enthält. Die Lesemittel benutzen diese MSISDN-Nummer, um eine Standorttabelle 80 in einer Vermittlungstelle für Mobildienste MSC (Mobile Switching Center) 8 abzufragen. Die Vermittlungsstelle für Mobildienste 8 verwaltet die Verbindungen im GSM-Mobiltelekommunikationssystem. Die Standorttabelle 80 enthält eine Information, welche dem momentanen Standort aller Abonnenten des GSM-Netzwerks entspricht oder mindestens dem Standort der Abonnenten, die sich momentan in einer anderen geographischen Zone befinden, als in der durch den für die Vermittlungsstelle für Mobildienste 8 verantwortlichen Netzwerkbetreiber verwalteten Zone.

Die Vorrichtung 7 umfasst unter anderem Mittel 76 zur Wiederaussendung der Meldung 9 über ein Interface 15 an die Funkrufzentrale 3. Die wiederausgesandte Meldung 9 enthält die entsprechende Rufnummer RN 90, erweitert mit der Standortinformation 92, welche dem momentanen Standort des Benutzers 12 entspricht, sowie ein Datentelegramm 93. Diese Meldung wird an die Funkrufzentrale 3 gesandt, die sie via das Interface I4 an den Empfänger 12 in der angegebenen geographischen Zone eines anderen Netzes weitersendet.

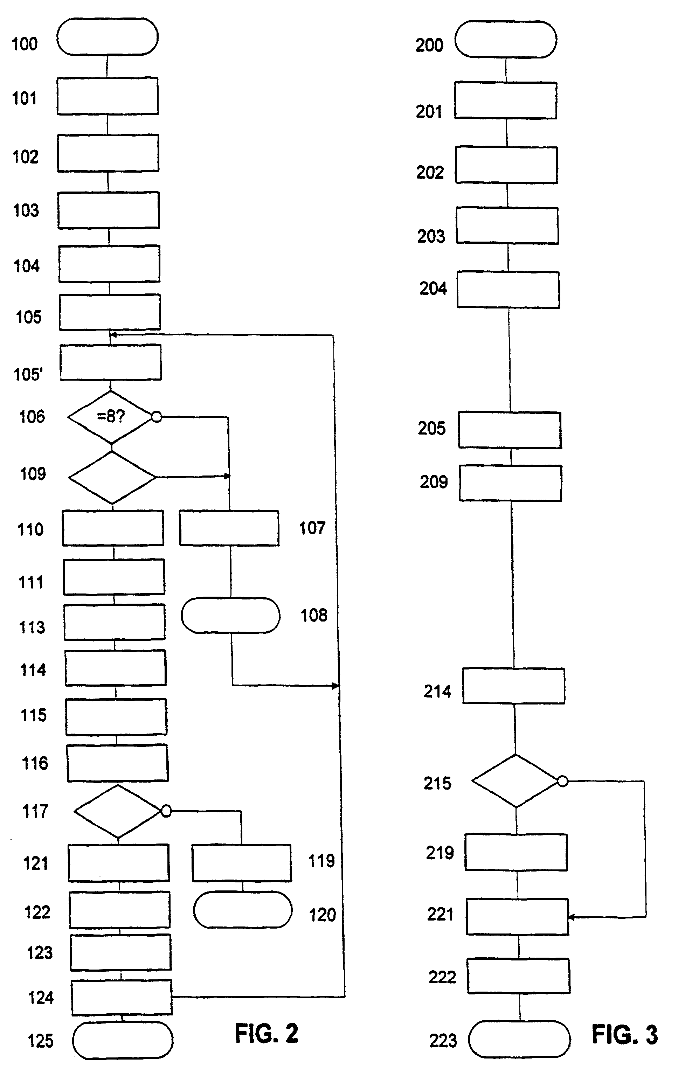

Es wird nun in bezug auf die Figur 2 ein Beispiel eines Meldungsübermittlungsverfahrens gemäss der Erfindung diskutiert.

Der Beginn des Verfahrens ist durch die Nummer 100 angezeigt. Der Anrufende 1, der eine Meldung an einen Benutzer 12 schicken will, gibt sie beispielsweise auf einem Personalcomputer ein und überträgt sie im Zuge des Schrittes 101 an die Funkrufzentrale 3, beispielsweise mit Hilfe eines Modems und über ein Interface I6/I5. Die Meldung 2 wird dann durch die Funkrufzentrale 3 (Schritt 102) empfangen und mit einer Empfängeridentifikation 30 (RIC), einer Empfangszone 33 sowie mit dem Alarmtyp 8 verknüpft. Der Alarmtyp 8 kennzeichnet die Meldungen für die Teilnehmer, welche diese neue Möglichkeit von Weiterleitung von Meldungen abonniert haben. Via das Interface 13 wird dann die Meldung an die Funkrufnetzsteuerung PAC 3' übertragen, dann via das Interface 12 an die Basisstationen 5, welche die Meldung anlässlich des Schrittes 103 über die Luftschnittstelle 11 aussenden. Die gesendete Meldung wird im Zuge des Schrittes 104 durch das Empfangsmittel 6 empfangen und an die Vorrichtung 7 weitergeleitet.

Die vom Empfangsmittel 6 erhaltene Meldung wird im Zug des Schrittes 105 im Buffer 70 zwischengespeichert. Die Vorrichtung des Schrittes 105' holt die "älteste" Meldung aus dem Buffer 70, welche nachfolgend als "aktuelle Meldung" 78 genannt wird und durch das von der Vorrichtung 7 ausgeführte Informatikprogramm weiterverarbeitet wird. Im Zug des Schrittes 106 verifiziert das durch die programmierbare Vorrichtung 7 ausgeführte Informatikprogramm den der aktuellen Meldung 78 zugeteilten Alarmtyp. Wenn der Alarmtyp 8 unterschiedlich ist, wird die aktuelle sowie die im Buffer 70 korrespondierende Meldung im Schritt 107 gelöscht und das Verfahren wird beendet (Schritt 108).

Andererseits, wenn die Meldung einen Alarm des Typs 8 aufweist, fährt das Programm mit dem Schritt 109 fort, während welchem die aktuelle Meldung 78 mit einer temporären Speichertabelle 75 verglichen wird. Im Fall von Übereinstimmung, d.h. wenn die aktuelle Meldung und die Meldung in der temporären Speichertabelle 75 einander entsprechen, wird die aktuelle sowie die im Buffer 70 gespeicherte Meldung gelöscht (Schritt 107) und das Verfahren wird beendet (Schritt 108). Andererseits, wenn die aktuelle Meldung 78 der in der temporären Speichertabelle 75 gespeicherten Meldung nicht entspricht, wird die aktuelle Meldung 78 in Zug des Schrittes 110 in die temporäre Speichertabelle 75 kopiert. Bevor die Routine zur Standortbestimmung des Empfängers, der Modifikation der geographischen Zone und der Meldungsweiterleitung begonnen wird, wird in Zug des Schrittes 111 diejenige Meldung im Buffer 70 gelöscht, welche zuvor im Schritt 110 in die temporäre Speichertabelle 75 kopiert wurde.

Das in der Vorrichtung 7 befindliche, beispielsweise auf einem Datenträger gespeicherte Programm fährt dann mit dem Schritt 113 fort, während welchem den RIC aus der aktuellen Meldung 78 gelesen wird. Im Schritt 114 konsultiert das Programm die RIC/MSISDN-Tabelle 79, in welcher für alle Teilnehmer mit dem Zusatzdienst "Weiterleitung von Meldungen" der RIC mit der korrespondierenden MSISDN abgelegt ist. Permanente Schnittstellen 13 zwischen der RIC/MSISDN-Tabelle und dem Teilnehmeradministrationssystem des Funkrufsystems 14 und dem Teilnehmeradministrationssystem des Mobiltelefonsystem 15 sichern einen ständig aktuellen sowie nachgeführten Stand derselben. Bei der Konsultation im Schritt 114 kennt das Programm auf Anfrage des RIC eindeutig die zugehörige MSISDN Nummer. Anlässlich des Schrittes 115 liest unter Verwendung der erörterten MSISDN-Nummer das Abfragemittel 74 eine weitere Standorttabelle 80 (HLR, Home Locating Register), welche beispielsweise in einer Vermittlungsstelle für Mobildienste (MSC, Mobile Switching Center) 8 gespeichert ist. Die Standorttabelle 80 teilt dem Abfragemittel 73 als Antwort den Aufenthaltsort des gleichen Teilnehmers im ersten Kommunikationssystem (GSM) in Form einer Locating Area (LA) mit: Das Programm gibt im Schritt 116 die erhaltene LA an die Korrespondenztabelle 700 weiter. Die Korrespondenztabelle 700 enthält eine erste Liste, in welcher sämtliche LA der kooperierenden Mobilnetze enthalten sind. Diese Liste referenziert auf eine zweite Liste, worin alle geographischen Zonen in Form einer geographischen Zone (GA, geographical Area) abgelegt sind, die sich im Versorgungsbereich der kooperierenden ERMES-Betreiber befinden, mit welchen ein ERMES-Roamingvertrag abgeschlossen wurde sowie für die der Zusatzdienst "Weiterleitung von Meldungen" angeboten wird. Mit dem Hinzukommen neuer Roamingpartner des ERMES Funkdienstsystems werden die Listen für die neuen LA sowie GA ergänzt und mit den entsprechenden Verknüpfungen versehen, d.h. die LA referenzieren auf die erforderlichen GA. Im Zug des Schrittes 117 ist es nun Aufgabe des Programms zu bestimmen, ob die aktuelle Meldung modifiziert und weitergeleitet werden kann oder muss. Eine Meldung muss nur dann wieder ausgesendet werden, wenn:
die Konsultation der Korrespondenztabelle 700 ergibt, dass der Empfänger sich momentan in einer anderen geographischen Zone (LA) als seiner Heimzone befindet, beispielsweise im Ausland,
der Empfänger sich gemäss der Korrespondenztabelle 700 in einer geographischen Zone (LA), beispielsweise in einem Land befindet, mit welchem ein Roamingvertrag abgeschlossen wurde.

Wenn mindestens eine dieser zwei Bedingungen nicht erfüllt ist, fährt das Programm mit dem Schritt 119 fort, in welchem die aktuelle Meldung 78 gelöscht wird, und endet mit dem Schritt 120.

Wenn aber diese zwei Bedingungen erfüllt sind, ist es dem Programm im Zug des Schrittes 121 möglich, bei der Konsultation der Korrespondenztabelle 700 mit Hilfe der gültigen LA den korrespondierenden GA zu erhalten. Mit dem Schritt 122 ersetzt das Programm die PA-Information in der Meldung 78 mit der GA-Information, die vom Schritt 121 erhalten wurde.

Modifiziert das Informatikprogramm die aktuelle Meldung 78, indem das beinhaltete Datenfeld mit der Paging Area Information (PA) gelöscht wird und an dessen Stelle ein neues Datenfeld einfügt, welches die COD Information beinhaltet, die vom Schritt 121 erhalten wurde.

Im Schritt 123 bereiten Weiterieitungsmittel 76 in der Vorrichtung 7 eine neue Meldung 9 vor, nun jedoch mit der modifizierten oder vorzugsweise ergänzten Übermittlungsadresse, welche den der Standorttabelle 80 des GSM-Systems entnommenen Standortinformationen entspricht. Beispielsweise kann die wieder ausgesandte Meldung 9 eine Standortinformation (GA) 92 enthalten, welche dem momentanen Standort des Teilnehmers im Ausland entspricht. Diese Meldung wird der Funkrufzentrale 3 beispielsweise über das Interface 15 des ERMES-Systems gesandt.

Im Schritt 124 wird die durch die Funkrufzentrale 3 empfangene korrigierte Meldung 9 wieder ausgestrahlt, unter Berücksichtigung der Empfängerstandortinformation (GA) 92. Vorzugsweise wird diese Meldung auf konventionelle Art über das Interface 13 zur Funkrufnetzsteuerung 3' übertragen, und dann über ein Interface 14, welches speziell für den internationalen Austausch bestimmt ist und auf dem bekannten Protokoll X.25 basiert, an einen anderen ERMES-Netzwerkbetreiber (Roamingpartner) wieder übermittelt, der verantwortlich ist für die geographische Zone, in welcher sich der Empfänger momentan befindet und der einen Roamingvertrag abgeschlossen hat. Die durch diesen anderen Netzwerkbetreiber auf seinem nationalen Netzwerk 10 empfangene Meldung wird dann über ein Interface 11 durch eine Basisstation 11 ausgesandt, die ähnlich der Basisstation 5 ist und kann so durch den Pager 12 des Empfängers empfangen werden.

Die Spezifikation des ERMES-Systems schreibt vor, dass im Fall der Aussendung einer Meldung in einer durch einen anderen Netzwerkbetreiber verwalteten geographischen Zone, der einen Roamingvertrag abgeschlossen hat, eine Meldung parallel in der geographischen Heimzone ausgesandt wird. Wenn das zweite Kommunikationssystem ein ERMES-System ist, muss folglich die Meldung 9 ebenfalls wieder im Rahmen dieses Schrittes 124 durch die Basisstationen 5 in der geographischen Heimzone ausgesandt werden. Der Inhalt dieser Meldung ist identisch mit dem Inhalt der Meldung, die vorher ausgesandt wurde.

Das Verfahren schliesst mit dem Schritt 125.

Diese Variante, welche einen vorbestimmten Alarm benutzt, beispielsweise den Alarm 8 des ERMES-Systems, monopolisiert einen der verfügbaren Alarme. Ausserdem ist es unmöglich, während der vorbestimmten temporären Speicherdauer der temporären Speichertabelle 75 zweimal die gleiche Meldung an den gleichen Empfänger zu senden.

Die Figur 3 stellt ein Organigramm einer zweiten Variante des Verfahrens dar, welche es erlaubt, diese Nachteile zu vermeiden. Diese Verfahrensvariante kann auf einer Vorrichtung ähnlich derjenigen der Fig. 1 betrieben werden.

Die Schritte 200 bis 201 des Verfahrens gemäss dieser Variante sind identisch mit den Schritten 100 bis 101 des in Bezug auf die Figur 2 diskutierten Verfahrens. Den Teilnehmern, die den Zusatzdienst "Weiterleitung von Meldungen" nicht abonniert haben, wird im Teilnehmer-Profil eine konventionelle Rufzone (Paging Area, PA) zugeteilt. In diesem Fall gelangen die Meldungen über das Vermittlungsnetzwerk 10 zu den Basisstationen 11 und werden dort via die Luftschnittstelle 11 ausgesendet und von den Empfangsgeräten empfangen.

Den Teilnehmern mit dem Zusatzdienst "Weiterleitung von Meldungen" wird erfindungsgemäss im Teilnehmer-Profil eine fiktive Rufzone (PA) zugeteilt (Schritt 202). Meldungen für diese Teilnehmer werden infolge der fiktiven PA an eine spezielle Basisstation 5 zugestellt, welche eigens für diese Teilnehmergruppe reserviert ist und mit ihrem 11 Interface nicht in den Äther ausstrahlt, sondern die Meldungen direkt über Kabel und Abschwächer an das Empfangsmittel 6 weitergibt (Schritt 203), welches diese an die Vorrichtung 7 weiterleitet (Schritt 204).

Die vom Empfangsmittel 6 erhaltenen Meldungen werden wie oben beschrieben verarbeitet, mit dem Unterschied, dass bei dieser zweiten Variante keine Filtrierung mittels Alarm 8 gemacht werden muss, da hier aufgrund der Zuteilung von fiktiven Rufnummern ausschliesslich die Meldungen für die Teilnehmer mit dem Zusatzdienst "Weiterleitung von Meldungen" in die fiktive Rufzone zum Empfangsmittel 6 gelangen. Das heisst, dass sich das Speichermanagement, die Empfängerstandortbestimmung sowie die Meldungsweiterleitung genau gleich gestaltet, wie dies unter der ersten Variante mit dem Alarmtyp beschrieben wurde.

Im Zug des Schrittes 205 speichert die Vorrichtung 7 die erhaltene Meldung in der Speicherzelle 78 als Datenstring "aktuelle Meldung".

Im Schritt 209 wird mit der Tabelle 79 in der Vorrichtung 7 aus dem Inhalt der aktuellen Meldung 78 die Radioidentifikationsadresse des Empfän-gers der Meldung bestimmt. Im Schritt 214 bestimmt dieses Mittel mit Hilfe der Korrespondenztabelle 79 die MSISDN-Nummer des Abonnenten im GSM-Netzwerk des Empfängers und fragen die Standorttabelle 80 mit Hilfe dieser MSISDN-Nummer ab, um den aktuellen Standort des Empfängers zu bestimmen.

Im Schritt 215 wird der gleiche Test durchgeführt, der in Bezug auf die Figur 2 diskutiert wurde, wenn die Meldung in einer anderen geographischen Zone wieder ausgestrahlt werden soll. Wenn der Ausgang des Tests positiv ist (beispielsweise weil der Empfänger im Ausland ist), geht das Programm zum Schritt 219 über, in welchem der COD für die Paging Area (PA) der aktuellen Meldung 78 zugefügt wird, um die Meldung nach dieser anderen geographischen Zone weiterzuleiten. Das Programm tritt danach zum Schritt 221 über.

Wenn das Programm am Ende des Schrittes 215 bestimmt, dass die Meldung nicht ausserhalb der geographischen Heimzone weitergeleitet werden muss, schreitet das Programm direkt zum Schritt 221.

Im Zug des Schrittes 221 wird die normale Rufnummer des Teilnehmers in der Heimzone mittels des Funkrufsystem-Teilnehmeradministrationssystems 14 bestimmt.

Die Meldung wird anschliessend im Schritt 222 durch das Weiterleitungsmittel 76 via das Interface 15 an die Funkrufzentrale 3 mit der früher bestimmten normalen Rufnummer wieder übermittelt. Auf konventionelle Art und Weise wird dieser normalen Rufnummer eine normale Rufzone (PA) zugeordnet. Diese Funkrufzentrale leitet dann via die Funkrufnetzsteuerung 3' die Meldung weiter, entweder nur in der geographischen Heimzone, oder, wenn sich der Empfänger entsprechend der Standorttabelle 80 in einer anderen geographischen Zone befindet, gleichzeitig in der geographischen Heimzone und in dieser anderen geographischen Zone. Das Verfahren schliesst dann mit dem Schritt 223.

Diese zweite Variante bietet den Vorteil einer einfacheren Programmierung der Vorrichtung 7, indem dort nur Meldungen für Abonnenten bearbeitet werden, welche die erweiterte Roaming-Möglichkeit abonniert haben. Die Vorrichtung 7 kann daher konsequenterweise aus einer einfacheren und ökonomischeren Arbeitsstation bestehen. Keine temporäre Tabelle 75 wird benötigt. Jedoch durchquert jede Meldung, welche für einen Abonnenten bestimmt ist, der diesen Service abonniert hat, zweimal die Funkrufzentrale 3, die dadurch stärker belastet wird. Die Übermittlungszeit der Meldungen an diesen Abonnenten wird verlängert, wenn er sich in seiner geographischen Heimzone befindet. In diesem Fall können in der Tat die Meldungen nur bei der zweiten Ausstrahlung mit der normalen Rufnummer empfangen werden, wenn die Fernkennzahl korrigiert worden ist. Ausserdem werden für jeden Teilnehmer, der diesen Service abonniert hat, zwei Rufnummer benötigt, eine normale und eine fiktive.

In den beiden mit Hilfe der Figuren 2 und 3 diskutierten Varianten wird die Standorttabelle 80 des GSM-Systems bei jeder ERMES-Meldungsübermitttung abgefragt, die für einen sich in einer anderen geographischen Zone befindenden autorisierten Abonnenten bestimmt ist. Das ERMES-System speichert nicht, wo sich der Empfänger befindet; man spricht von "follow-me roaming". Diese Konfiguration macht eine Anpassung des ERMES-Systems überflüssig, insbesondere eine Anpassung der Funkrufzentrale 3 und der Funkrufnetzsteuerung 3'.

Wenn Anpassungen des zweiten Kommunikationssystems keine Schwierigkeiten bieten, kann es von Vorteil sein, es nur so abzuändern, dass das System nach jeder wieder ausgestrahlten Meldung den Standort des Empfängers speichert. Zu diesem Zwecke kann man eine Standorttabelle mit Angaben von Benutzern des zweiten Service (ERMES) vorsehen, die mit den aus der Standorttabelle 80 (im GSM-System) bezogenen Standortinformationen aktualisiert wird.

Obwohl sich die vorangehende Beschreibung im wesentlichen auf die kombinierte Verwendung eines zellularen GSM-Funktelefons und eines ERMES-Pagers bezieht, ist es wichtig zu sehen, dass die Erfindung auch bei anderen Typen von drahtlosen Telefonen und Pagem Anwendung finden kann, insbesondere bei der kombinierten Verwendung eines NMT-Telefons mit einem ERMES-Pager. Da das NMT-System nicht über die Möglichkeit zum Senden kurzer Meldungen verfügt, erweist sich diese Kombination als besonders vorteilhaft. Die Erfindung kann auch bei der gleichzeitigen Verwendung von zwei drahtlosen Telefonsystemen Anwendung finden.

## Patentansprüche

1. Verfahren zur Weiterleitung von Meldungen an Mobilteilnehmer, die ein erstes Kommunikationssystem und ein zweites Kommunikationssystem benutzen,
wobei das erste Kommunikationssystem die Übermittlung von Meldungen einer ersten Art an eine Vielzahl von auf eine Vielzahl von verschiedenen geographischen Zonen verteilten Endgeräten einer ersten Art erlaubt, wobei jede geographische Zone durch mindestens einen Netzwerkbetreiber verwaltet wird, wobei jeder Netzwerkbetreiber eine Standorttabelle (80) verwaltet, welche eine Information enthält, die abhängig vom aktuellen geographischen Standort von mindestens gewissen Mobilteilnehmern bei diesem Netzwerkbetreiber ist, wobei Roaming-Mittel vorgesehen sind, um diese Standorttabelle zu aktualisieren, wenn sich ein Mobilteilnehmer mit seinem Endgerät der ersten Art in eine andere geographische Zone verschiebt,
wobei das zweite Kommunikationssytem die Übermittlung von Meldungen einer zweiten Art an eine Vielzahl von auf eine Vielzahl von verschiedenen geographischen Zonen verteilten Endgeräten einer zweiten Art (12) erlaubt, wobei jede geographische Zone durch mindestens einen Netzwerkbetreiber verwaltet wird,
wobei mindestens gewisse Meldungen der zweiten Art an den Mobilteilnehmer (12) durch das zweite Kommunikationssystem übermittelt werden, indem die in der genannten Standorttabelle (80) gespeicherte Information verwendet wird, welche dem geographischen Standort entspricht, in welchem sich der genannte Mobilteilnehmer im Moment befindet,
**dadurch gekennzeichnet, dass** vom zweiten Kommunikationssystem ausgestrahlte genannte mindestens gewisse Meldungen der zweiten Art von einer Vorrichtung (6,7) empfangen und von dieser, unter Verwendung der genannten in der genannten Standorttabelle (80) gespeicherten Information, via das genannte zweite Kommunikationssystem an den Mobilteilnehmer (12) übermittelt werden.

2. Verfahren gemäss Anspruch 1, **dadurch gekennzeichnet, dass** die in der genannten Standorttabelle (80) von Mobilteilnehmern des ersten Kommunikationssystems gespeicherte Information nur für die Weiterleitung von Meldungen verwendet wird, welche für Mobilteilnehmer bestimmt sind, die sich ausserhalb ihrer geographischen Heimzonen befinden können, welche durch den Netzwerkbetreiber verwaltet wird, bei welchem der genannte Mobilteilnehmer Abonnent ist.

3. Verfahren gemäss einem der vorhergehenden Ansprüche, in welchem das zweite Kommunikationssystem erlaubt, den versandten Meldungen Kategorien (31) zuzuordnen, wobei einer besonderen Kategorie Meldungen zugeordnet sind, welche Mobilteilnehmern übermittelt werden sollen, die die Weiterleitungsmöglichkeit abonniert haben, wobei das genannte Verfahren einen Filterschritt (106) beinhaltet, bei dem nur Meldungen dieser besonderen Kategorie zurückgehalten werden um festzustellen, ob sie mit der genannten Information, welche sich in der genannten durch den Netzwerkbetreiber des ersten Kommunikationssystems verwalteten Standorttabelle (80) befindet, weitergeleitet werden müssen.

4. Verfahren gemäss einem der vorhergehenden Ansprüche, in welchem die durch das zweite Kommunikationssystem übertragenen Meldungen der zweiten Art durch Mittel zur Sendung von Meldungen (3, 3', 5) ausgestrahlt werden und dann durch eine Vorrichtung (6, 7) empfangen werden, welche fähig ist, die genannte Standorttabelle (80) abzufragen und zu beurteilen, ob der Empfänger der genannten Meldungen sich in seiner geographischen Heimzone befindet,
wobei die genannte Vorrichtung (7) dem genannten Mittel zur Sendung von Meldungen (3, 3', 5) eine Meldung (9) mit einer ergänzten und/oder korrigierten Adresse (90, 92) des Empfängers sendet, wenn der Empfänger sich nicht in seiner geographischen Heimzone befindet,
wobei die Mittel zur Sendung von Meldungen (3, 3', 5) dann eine neue Meldung der zweiten Art mit der neuen ergänzten Adresse wieder aussenden.

5. Verfahren gemäss dem vorhergehenden Anspruch, in welchem die Kategorie von den durch das Mittel zur Sendung von Meldungen (3, 3', 5) wieder ausgestrahlten Meldungen geändert wird.

6. Verfahren gemäss einem der Ansprüche 1 bis 3, **dadurch gekennzeichnet, dass** jeder Netzwerkbetreiber des zweiten Kommunikationssystems eine Standorttabelle verwaltet, welche für jeden Mobilteilnehmer des zweiten Kommunikationssystems bei diesem Netzwerkbetreiber eine Information enthält, welche den aktuellen geographischen Standort des Mobilteilnehmers enthält, wobei die genannte Standorttabelle des zweiten Kommunikationssystems mit den Standortinformationen der Standorttabelle (8) der Mobilteilnehmer des ersten Kommunikationssystems aktualisiert wird, wenn ein Mobilteilnehmer des ersten und des zweiten Kommunikationssystems sich in eine andere geographische Zone verschiebt.

7. Verfahren, bestimmt zur Ausführung durch eine Vorrichtung (7), und welche mindestens ein programmierbares Gerät enthält, **gekennzeichnet durch** folgende Operationen:
Empfang (104, 204) einer über eine Luftschnittstelle ausgestrahlte Meldung, welche in einem zweiten Kommunikationssystem ausgesandt wird, welches die Übermittlung von Meldungen einer zweiten Art an eine Vielzahl von Endgeräten (12) einer zweiten Art erlaubt,
Dekodierung (113, 209) der Empfängeridentifikation der genannten Meldung,
Abfragen (114, 214) einer **durch** den Netzwerkbetreiber eines ersten Kommunikationssystems verwalteten Standorttabelle (80), welche die Übermittlung von Meldungen einer ersten Art an eine Vielzahl von Endgeräten einer ersten Art erlaubt, wobei die genannte Standorttabelle (80) eine Information enthält, die vom aktuellen Standort von mindestens gewissen Mobilteilnehmern bei diesem Netzwerkbetreiber abhängig ist, wobei Roaming-Mittel vorgesehen sind, um die genannte Standorttabelle (80) auf den aktuellen Stand zu bringen, wenn sich ein Mobilteilnehmer mit seinem Endgerät der ersten Art in eine andere geographische Zone als seine Heimzone verschiebt,
Weiterleitung (123, 222) der Meldung (9) via das zweite Kommunikationssystem mit einer mit der genannten Standorttabelle (80) bestimmten Adresse, so dass die Meldung bis zum Endgerät (12) der zweiten Art des Empfängers geleitet wird, wenn die genannte Information angibt, dass der Empfänger der Meldung sich nicht in seiner genannten geographischen Heimzone befindet.

8. Verfahren gemäss dem vorhergehenden Anspruch, in welchem die genannte weitergeleitete Meldung (9) an ein Mittel zur Sendung von Meldungen (3, 3', 5) übermittelt wird, welches fähig ist, Meldungen der zweiten Art ausserhalb der geographischen Heimzone zu leiten.

9. Verfahren gemäss einem der Ansprüche 7 oder 8, worin die genannten durch die genannte Vorrichtung (7) erhaltenen Meldungen eine Kategorieangabe (31) enthalten, wobei das genannte Verfahren einen Schritt zur Bestimmung der genannten Kategorie (106) enthält, wobei der genannte Schritt zur Kategoriebestimmung vor der genannten Operation (114) von Abfragen der Standorttabelle (80) durchgeführt wird, wobei das genannte Verfahren unterbrochen wird (108) wenn die bestimmte Kategorie von einem vordefinierten Wert verschieden ist.

10. Verfahren gemäss einem der Ansprüche 7 bis 9, enthaltend einen Schritt (110) der Speicherung der Meldungen (9) während einer vorbestimmten Zeitdauer und einen Schritt (109) des Vergleichs des Empfängers der während dem genannten Empfangsschritt (104) erhaltenen Meldungen, wobei das Verfahren unterbrochen (108) wird, wenn der Empfänger der empfangenen Meldung identisch mit dem Empfänger einer während der genannten vorbestimmten Zeitdauer wieder übermittelten Meldung (9) ist.

11. Verfahren gemäss einem der vorhergehenden Ansprüche, in welchem das genannte erste Kommunikationssystem ein Zellularfunktelefonsystem ist.

12. Verfahren gemäss einem der vorhergehenden Ansprüche, in welchem das genannte erste Kommunikationssystem ein System nach dem GSM-Standard ist.

13. Verfahren gemäss einem der vorhergehenden Ansprüche, in welchem das genannte zweite Kommunikationssystem ein Pager-System ist.

14. Verfahren gemäss einem der vorhergehenden Ansprüche, in welchem das genannte zweite Kommunikationssystem ein System nach dem ERMES-Standard ist.

15. Programmierbare Vorrichtung (7), welche durch ein Programm gesteuert wird, welches folgende Operationen ausführen kann:
Empfang (104, 204) einer über eine Luftschnittstelle ausgestrahlte Meldung, welche in einem zweiten Kommunikationssystem ausgesandt wird, welches die Übermittlung von Meldungen einer zweiten Art an eine Vielzahl von Endgeräten (12) einer zweiten Art erlaubt,
Dekodierung (113, 209) der Empfängeridentifikation der genannten Meldung,
Abfragen (114, 214) einer durch den Netzwerkbetreiber eines ersten Kommunikationssystems verwalteten Standorttabelle (80), welche die Übermittlung von Meldungen einer ersten Art an eine Vielzahl von Endgeräten einer ersten Art erlaubt, wobei die genannte Standorttabelle (80) eine Information enthält, die vom aktuellen Standort von mindestens gewissen Mobilteilnehmern bei diesem Netzwerkbetreiber abhängig ist, wobei Roaming-Mittel vorgesehen sind, um die genannte Standorttabelle (80) auf den aktuellen Stand zu bringen, wenn sich ein Mobilteilnehmer mit seinem Endgerät der ersten Art in eine andere geographische Zone als seine Heimzone verschiebt,
Weiterleitung (123, 222) der Meldung (9) via das zweite Kommunikationssystem mit einer mit der genannten Standorttabelle (80) bestimmten Adresse, so dass die Meldung bis zum Endgerät (12) der zweiten Art des Empfängers geleitet wird, wenn die genannte Information angibt, dass der Empfänger der Meldung sich nicht in seiner genannten geographischen Heimzone befindet.

16. Datenträger, der durch einen Computer gelesen werden kann und einen Programmcode enthält, welcher verwendet werden kann, um eine programmierbare Vorrichtung (7) zu befähigen folgende Schritte durchzuführen:
Empfang (104, 204) einer über eine Luftschnittstelle ausgestrahlte Meldung, welche in einem zweiten Kommunikationssystem ausgesandt wird, welches die Übermittlung von Meldungen einer zweiten Art an eine Vielzahl von Endgeräten (12) einer zweiten Art erlaubt,
Dekodierung (113, 209) der Empfängeridentifikation der genannten Meldung,
Abfragen (114, 214) einer durch den Netzwerkbetreiber eines ersten Kommunikationssystems verwalteten Standorttabelle (80), welche die Übermittlung von Meldungen einer ersten Art an eine Vielzahl von Endgeräten einer ersten Art erlaubt, wobei die genannte Standorttabelle (80) eine Information enthält, die vom aktuellen Standort von mindestens gewissen Mobilteilnehmern bei diesem Netzwerkbetreiber abhängig ist, wobei Roaming-Mittel vorgesehen sind, um die genannte Standorttabelle (80) auf den aktuellen Stand zu bringen, wenn sich ein Mobilteilnehmer mit seinem Endgerät der ersten Art in eine andere geographische Zone als seine Heimzone verschiebt,
Weiterleitung (123, 222) der Meldung (9) via das zweite Kommunikationssystem mit einer mit der genannten Standorttabelle (80) bestimmten Adresse, so dass die Meldung bis zum Endgerät (12) der zweiten Art des Empfängers geleitet wird, wenn die genannte Information angibt, dass der Empfänger der Meldung sich nicht in seiner genannten geographischen Heimzone befindet.

17. Vorrichtung (6, 7) enthaltend mindestens eine programmierbare Vorrichtung, **gekennzeichnet durch** folgende Komponenten:
Mittel zum Empfang (6) einer Meldung, welche in einem zweiten Kommunikationssystem über eine Luftschnittstelle ausgestrahlt wird, welches die Übermittlung von Meldungen einer zweiten Art an eine Vielzahl von Endgeräten (12) einer zweiten Art erlaubt,
Mittel zum Abfragen (74) einer **durch** den Netzwerkbetreiber eines ersten Kommunikationssystems verwalteten Standorttabelle (80), welches die Übermittlung von Meldungen einer ersten Art an eine Vielzahl von Endgeräten einer ersten Art erlaubt, wobei die genannte Standorttabelle (80) eine Information enthält, die vom aktuellen Standort von mindestens gewissen Mobilteilnehmern abhängig ist, wobei Roaming-Mittel vorgesehen sind, um die genannte Standorttabelle (80) auf den aktuellen Stand zu bringen, wenn sich ein Mobilteilnehmer mit seinem Endgerät der ersten Art in eine andere geographische Zone als seine Heimzone verschiebt,
Mittel zur Weiterleitung (76) der Meldung (9) via das zweite Kommunikationssystem mit einer mit der genannten Standorttabelle (80) bestimmten Adresse (90), so dass die Meldung bis zum Endgerät (12) der zweiten Art des Empfängers geleitet wird, wenn die genannte Information angibt, dass der Empfänger der Meldung sich nicht in seiner genannten geographischen Heimzone befindet.

18. Vorrichtung gemäss dem vorhergehenden Anspruch, enthaltend zusätzlich temporäre Speichermittel (75) der empfangenen Meldungen.

## Claims

1. Method for forwarding of messages to mobile subscribers who use a first communications system and a second communications system,
the first communications system enabling the transmission of messages of a first type to a multiplicity of terminals of a first type, distributed across a multiplicity of different geographic areas, each geographic area being managed by at least one network operator, each network operator administering a location register (80) which contains information that is dependent upon the current geographic location of at least certain mobile subscribers with this network operator, roaming means being provided for updating this location register when a mobile subscriber, with his terminal of the first type, moves into another geographic area,
the second communications system enabling the transmission of messages of a second type to a multiplicity of terminals of the second type (12), distributed across a multiplicity of different geographic areas, each geographic area being managed by at least one network operator,
at least certain messages of the second type being transmitted to the mobile subscriber (12) by the second communications system in that the information stored in the said location register (80) is used that corresponds to the geographic location where the mobile subscriber is located at the moment,
**characterised in that** said at least certain messages of the second type transmitted by the second communications system are received by a device (6, 7), and are forwarded from this device to the mobile subscriber (12), via the said second communications system, using the said information stored in the said location register (80).

2. Method according to claim 1, **characterised in that** the information stored in the said location register (80) for mobile subscribers of the first communications system is only used for the forwarding of messages which are intended for mobile subscribers who are able to be located outside their geographic home areas, managed by the network operator with whom said mobile subscriber is a subscriber.

3. Method according to one of the preceding claims, wherein the second communications system enables categories (31) to be assigned to the sent messages, messages which are supposed to be transmitted to mobile subscribers who have subscribed to the forwarding possibility being assigned to a special category, the said method containing a filter step (106) in which only messages of this special category are retained in order to determine whether they have to be forwarded with the said information that is located in the said location register (80) administered by the network operator of the first communications system.

4. Method according to one of the preceding claims, wherein messages of the second type, transmitted by the second communications system, are emitted by means for sending messages (3, 3', 5) and then received by a device (6, 7) which is capable of querying said location register (80) and of judging whether the recipient of the said message is located in his geographic home area,
the said device (7) sending a message (9) with a supplemented and/or corrected recipient address (90, 92) of the recipient to the said means for sending messages (3, 3', 5), if the recipient is not located in his geographic home area,
the means for sending messages (3, 3', 5) then re-sending a new message of the second type with the new supplemented address.

5. Method according to the preceding claim, wherein the category of the messages, re-sent by the means for sending messages (3, 3', 5), is changed.

6. Method according to one of the claims 1 to 3, **characterised in that** each network operator of the second communications system administers a location register which contains information, containing the current geographic location of a mobile subscriber, for each mobile subscriber of the second communications system with this network operator, the said location register of the second communications system being updated with the location information of the location register (80) of the mobile subscribers of the first communications system, when a mobile subscriber of the first and the second communications system moves into another geographic area.

7. Method, intended to be performed by a device (7) which comprises at least one programmable device, **characterised by** the following operations:
receiving (104, 204) of a message emitted via an air interface, which message is sent in a second communications system that enables the transmission of messages of a second type to a multiplicity of terminals (12) of a second type,
decoding (113, 209) of the recipient identification for the said message,
querying (114, 214) of a location register (80) administered by the network operator of a first communications system, which register enables the transmission of messages of a first type to a multiplicity of terminals of a first type, the said location register (80) containing information dependent upon the current location of at least certain mobile subscribers with this network operator, roaming means being provided in order to update the said location register (80), when a mobile subscriber moves with his terminal of the first type into a geographic area other than his home area,
forwarding (123, 122) of the message (9), via the second communications system, with an address determined through the said location register (80), so that the message is forwarded to the recipient's terminal (12) of the second type, when the said information indicates that the recipient of the message is not located in his said geographic home area.

8. Method according to the preceding claim, wherein the said forwarded message (9) is transmitted to a means for sending messages (3, 3', 5) which is capable of sending messages of the second type outside the geographic home area.

9. Method according to one of the claims 7 or 8, wherein the said messages, received through the said device (7), contain a category indication (31), the said method including a step for determination of the said category (106), the said step for determination of the category being executed before the said operation (114) of querying of the location register (80), the said method being interrupted (108) when the determined category is different from a predefined value.

10. Method according to one of the claims 7 to 9, comprising a step (110) for the storage of the messages (9) during a predetermined period of time and a step (109) of comparing the recipient of the messages received during the said receiving step (104), the method being interrupted (108) when the recipient of the received message is identical to the recipient of a message (9) re-transmitted during the said predetermined period of time.

11. Method according to one of the preceding claims, wherein the said first communications system is a cellular radio telephone system.

12. Method according to one of the preceding claims, wherein the said first communications system is according to the GSM standard.

13. Method according to one of the preceding claims, wherein the said second communications system is a pager system.

14. Method according to one of the preceding claims, wherein the said second communications system is a system according to the ERMES standard.

15. Programmable device (7), which is controlled by a program which is able to carry out the following operations:
receiving (104, 204) of a message emitted via an air interface, which message is transmitted in a second communications system that enables the transmission of messages of a second type to a multiplicity of terminals (12) of a second type,
decoding (113, 209) of the recipient identification for the said message,
querying (114, 214) of a location register (80) administered by the network operator of a first communications system, which register enables the transmission of messages of a first type to a multiplicity of terminals of a first type, the said location register (80) containing information dependent upon the current location of at least certain mobile subscribers with this network operator, roaming means being provided in order to update the said location register (80) when a mobile subscriber, with his terminal of the first type, moves into a geographic area other than his home area,
forwarding (123, 222) of the message (9), via the second communications system, with an address determined through the said location register (80) so that the message is transmitted to the recipient's terminal (12) of the second type when the said information indicates that the recipient of the message is not located in his said geographic home area.

16. Data carrier which is able to be read by a computer and which contains a program code that is able to be used to enable a programmable device (7) to carry out the following steps:
receiving (104, 204) of a message emitted via an air interface, which message is transmitted in a second communications system that enables the transmission of messages of a second type to a multiplicity of terminals (12) of a second type,
decoding (113, 209) of the recipient identification for the said message,
querying (114, 214) of a location register (80) administered by the network operator of a first communications system, which register enables the transmission of messages of a first type to a multiplicity of terminals of a first type, the said location register (80) containing information dependent upon the current location of at least certain mobile subscribers with this network operator, roaming means being provided in order to update the said location register (80) when a mobile subscriber, with his terminal of the first type, moves into a geographic area other than his home area,
forwarding (123, 222) of the message (9), via the second communications system, with an address determined through the said location register (80) so that the message is transmitted to the recipient's terminal (12) of the second type when the said information indicates that the recipient of the message is not located in his said geographic home area.

17. Device (6, 7) containing at least one programmable device, **characterised by** the following components:
means for receiving (6) of a message which is transmitted in a second communications system via an air interface, which system enables the transmission of messages of a second type to a multiplicity of terminals (12) of a second type,
means for querying (74) of a location register (80), maintained by the network operator of a first communications system, which system enables the transmission of messages of a first type to a multiplicity of terminals of a first type, the said location register (80) containing information dependent upon the current location of at least certain mobile subscribers, roaming means being provided in order to update the said location register (80) when a mobile subscriber, with his terminal of the first type, moves into a geographic area other than his home area,
means for forwarding (76) of the message (9), via the second communications system, with an address (90) determined through the said location register (80) so that the message is transmitted to the recipient's terminal (12) of the second type when the said information indicates that the recipient of the message is not located in his said geographic home area.

18. Device according to the preceding claim, containing additional temporary means (75) of storage of the messages received.

## Revendications

1. Procédé d'acheminement de messages jusqu'à des abonnés de téléphonie mobile qui utilisent un premier et un deuxième systèmes de communications,
le premier système de communications permettant la transmission de messages d'une première catégorie à un grand nombre de terminaux d'une première catégorie répartis entre un grand nombre de zones géographiques différentes, chaque zone géographique étant gérée par au moins un exploitant de réseau, chaque exploitant de réseau gérant un tableau de positions (80) qui contient des renseignements qui sont fonctions de la position géographique actuelle d'au moins certains abonnés de téléphonie mobile chez cet exploitant de réseau, des moyens de déplacement existant pour mettre à jour ce tableau de positions quand un abonné de téléphonie mobile passe dans une autre zone géographique avec son terminal de première catégorie,
le deuxième système de communications permettant la transmission de messages d'une deuxième catégorie à un grand nombre de terminaux d'une deuxième catégorie (12) répartis entre un grand nombre de zones géographiques différentes, chaque zone géographique étant gérée par au moins un exploitant de réseau,
au moins certains de ces messages de deuxième catégorie étant transmis à l'abonné de téléphonie mobile (12) par le deuxième système de communications grâce à l'utilisation de ceux des renseignements enregistrés dans le tableau de positions (80) mentionné qui correspondent à la position géographique où l'abonné de téléphonie mobile mentionné se trouve à l'instant considéré,
**caractérisé en ce que** certains messages mentionnés, au moins, de la deuxième catégorie, émis par le deuxième système de communications, sont reçus par un dispositif (6, 7) qui les transmet à l'abonné (12) de téléphonie mobile en utilisant les renseignements mentionnés, enregistrés dans le tableau de positions (80) mentionné, et en passant par l'intermédiaire du deuxième système de communications mentionné.

2. Procédé selon la première revendication, **caractérisé en ce que** les renseignements enregistrés, dans le tableau de positions (80) mentionné, par des abonnés de téléphonie mobile du premier système de communications ne sont utilisés que pour transmettre des messages destinés à
des abonnés de téléphonie mobile qui peuvent se trouver à l'extérieur de leurs zones géographiques de rattachement, ces renseignements étant gérés par l'exploitant de réseau où est inscrit l'abonné de téléphonie mobile mentionné.

3. Procédé selon l'une des revendications précédentes, dans lequel le deuxième système de communications permet d'attribuer des catégories (31) aux messages envoyés, certains messages étant attribués à une catégorie particulière, à savoir les messages qui doivent être transmis à des abonnés de téléphonie mobile qui ont souscrit à la possibilité d'acheminement, le procédé en question comportant un pas de filtrage (106) dans lequel ne sont retenus que des messages de cette catégorie particulière afin d'établir s'ils doivent être transmis avec les renseignements mentionnés, qui se trouvent dans le tableau de positions (80) mentionné, qui est géré par l'exploitant de réseau du premier système de communications.

4. Procédé selon l'une des revendications précédentes, avec lequel les messages de la deuxième catégorie transmis par le deuxième système de communications sont émis, sous forme d'ondes radio, par des moyens d'émission de messages (3, 3', 5) puis reçus par un dispositif (6, 7) qui est en mesure d'interroger le tableau de positions (80) mentionné et de juger si le destinataire des messages mentionnés se trouve dans sa zone géographique de rattachement,
le dispositif mentionné (7) envoyant au moyen mentionné d'émission de messages (3, 3', 5) un message (9) comportant une adresse (90, 92) du destinataire complétée ou corrigée, ou les deux, si le destinataire ne se trouve pas dans sa zone géographique de rattachement,
les moyens d'émission de messages (3, 3', 5) envoyant alors de nouveau un autre message de la deuxième catégorie comportant la nouvelle adresse complétée.

5. Procédé selon la revendication précédente, dans lequel la catégorie est changée par les messages de nouveau envoyés par le moyen d'émission de messages (3, 3', 5).

6. Procédé selon l'une des revendications 1 à 3, **caractérisé en ce que** chaque exploitant de réseau du deuxième système de communications gère un tableau de positions qui contient pour chaque abonné de téléphonie mobile du deuxième système de communications, chez cet exploitant de réseau, des renseignements qui comportent la position géographique actuelle de l'abonné de téléphonie mobile, le tableau de positions mentionné du deuxième système de communications étant mis à jour avec les renseignements sur les positions provenant du tableau de positions (8) des abonnés de téléphonie mobile du premier système de communications quand un abonné de téléphonie mobile du premier et du deuxième systèmes de communications passe dans une autre zone géographique.

7. Procédé destiné à être exécuté par un dispositif (7) qui contient au moins un appareil programmable, **caractérisé par** les pas suivants :
réception (104, 204) d'un message émis par une interface radio dans un deuxième système de communications qui permet la transmission de messages d'une deuxième catégorie à un grand nombre de terminaux (12) d'une deuxième catégorie,
décodage (113, 209) de l'identification du destinataire du message mentionné,
interrogation (114, 214) d'un tableau de positions (80) géré par l'exploitant de réseau d'un premier système de communications et permettant la transmission de messages d'une première catégorie à un grand nombre de terminaux d'une première catégorie, le tableau de positions (80) mentionné contenant des renseignements qui sont fonction de la position, à l'instant considéré, d'au moins certains abonnés de téléphonie mobile chez cet exploitant de réseau, des moyens de déplacement existant pour mettre à jour le tableau de positions (80) mentionné si un abonné de téléphonie mobile passe, avec son terminal de la première catégorie, dans une autre zone géographique que sa zone de rattachement,
transmission (123, 222) du message (9) par l'intermédiaire du deuxième système de communications, avec une adresse déterminée au moyen du tableau de positions (80) mentionné, de telle sorte que le message est amené jusqu'au terminal (12) de deuxième catégorie du destinataire si les renseignements mentionnés indiquent que le destinataire du message ne se trouve pas dans sa zone de rattachement mentionnée.

8. Procédé selon la revendication précédente, avec lequel le message acheminé mentionné (9) est envoyé à un moyen d'envoi de messages (3, 3', 5) qui est en mesure de diriger des messages de la deuxième catégorie en dehors de la zone géographique de rattachement.

9. Procédé selon la revendication 7 ou 8, avec lequel les messages mentionnés reçus par le dispositif mentionné (7) contiennent une indication de catégorie (31), le procédé mentionné comportant un pas de détermination de la catégorie mentionnée (106), le pas en question étant effectué pour déterminer la catégorie avant l'opération mentionnée (114) d'interrogation du tableau de positions (80), le procédé mentionné étant interrompu (108) quand la catégorie déterminée diffère d'une valeur prévue d'avance.

10. Procédé selon l'une des revendications 7 à 9, comportant un pas (110) de mise en mémoire des messages (9) pendant une durée déterminée et un pas (109) de comparaison du destinataire des messages reçus pendant le pas de réception mentionné (104), ce procédé étant interrompu (108) quand le destinataire du message reçu est identique au destinataire d'un message transmis de nouveau (9) pendant la durée déterminée mentionnée.

11. Procédé selon l'une des revendications précédentes, avec lequel le premier système de communications mentionné est un système de téléphonie cellulaire.

12. Procédé selon l'une des revendications précédentes, avec lequel le premier système de communications mentionné fonctionne selon la norme GSM.

13. Procédé selon l'une des revendications précédentes, avec lequel le deuxième système de communications mentionné est un système d'appel unilatéral de personnes ("pager").

14. Procédé selon l'une des revendications précédentes, avec lequel le deuxième système de communications mentionné est un système conforme à la norme ERMES.

15. Dispositif programmé (7) commandé par un programme qui peut exécuter les opérations suivantes :
réception (104, 204) d'un message émis par une interface radio dans un deuxième système de communications permettant la transmission de messages d'une deuxième catégorie à un grand nombre de terminaux (12) d'une deuxième catégorie,
décodage (113, 209) de l'identification de destinataire du message mentionné,
interrogation (114, 214) d'un tableau de positions (80) géré par l'exploitant de réseau d'un premier système de communications et permettant la transmission de messages d'une première catégorie à un grand nombre de terminaux d'une première catégorie, le tableau de positions (80) mentionné contenant des renseignements qui sont fonction de la position, à l'instant considéré, d'au moins certains abonnés de téléphonie mobile chez cet exploitant de réseau, des moyens de déplacement existant pour mettre à jour le tableau de positions (80) mentionné si un abonné de téléphonie mobile passe, avec son terminal de la première catégorie, dans une autre zone géographique que sa zone de rattachement,
transmission (123, 222) du message (9) par l'intermédiaire du deuxième système de communications, avec une adresse déterminée au moyen du tableau de positions (80) mentionné, de telle sorte que le message est amené jusqu'au terminal (12) de deuxième catégorie du destinataire si les renseignements mentionnés indiquent que le destinataire du message ne se trouve pas dans sa zone géographique de rattachement mentionnée.

16. Support de données pouvant être lu par un ordinateur et comportant un code de programme qui peut être utilisé pour conférer à un dispositif programmable (7) la capacité d'exécuter les pas suivants :
réception (104, 204) d'un message émis par une interface radio dans un deuxième système de communications qui permet la transmission de messages d'une deuxième catégorie à un grand nombre de terminaux (12) d'une deuxième catégorie,
décodage (113, 209) de l'identification du destinataire du message mentionné,
interrogation (114, 214) d'un tableau de positions (80) géré par l'exploitant de réseau d'un premier système de communications et permettant la transmission de messages d'une première catégorie à un grand nombre de terminaux d'une première catégorie, le tableau de positions (80) mentionné contenant des renseignements qui sont fonction de la position, à l'instant considéré, d'au moins certains abonnés de téléphonie mobile chez cet exploitant de réseau, des moyens de déplacement existant pour mettre à jour le tableau de positions (80) mentionné si un abonné de téléphonie mobile passe, avec son terminal de la première catégorie, dans une autre zone géographique que sa zone de rattachement,
transmission (123, 222) du message (9) par l'intermédiaire du deuxième système de communications, avec une adresse déterminée au moyen du tableau de positions (80) mentionné, de telle sorte que le message est amené jusqu'au terminal (12) de deuxième catégorie du destinataire si les renseignements mentionnés indiquent que le destinataire du message ne se trouve pas dans sa zone géographique de rattachement mentionnée.

17. Dispositif (6, 7) comportant au moins un dispositif programmable, **caractérisé par** les éléments constitutifs suivants :
moyens de réception (6) d'un message émis par une interface radio dans un deuxième système de communications, qui permettent la transmission de messages d'une deuxième catégorie à un grand nombre de terminaux (12) d'une deuxième catégorie,
moyens d'interrogation (74) d'un tableau de positions (80) géré par l'exploitant de réseau d'un premier système de communications et permettant la transmission de messages d'une première catégorie à un grand nombre de terminaux d'une première catégorie, le tableau de positions (80) mentionné contenant des renseignements qui sont fonction de la position, à l'instant considéré, d'au moins certains abonnés de téléphonie mobile, des moyens de déplacement existant pour mettre à jour le tableau de positions (80) mentionné si un abonné de téléphonie mobile passe, avec son terminal de la première catégorie, dans une autre zone géographique que sa zone de rattachement,
moyens de transmission (76) du message (9) par l'intermédiaire du deuxième système de communications, avec une adresse (90) déterminée au moyen du tableau de positions (80) mentionné, de telle sorte que le message est amené jusqu'au terminal (12) de deuxième catégorie du destinataire si les renseignements mentionnés indiquent que le destinataire du message ne se trouve pas dans sa zone de rattachement géographique.

18. Dispositif selon la revendication précédente, équipé en outre de moyens de stockage temporaire (75) des messages reçus.
